# EUROPEAN PATENT SPECIFICATION

(11) **EP 2 030 417 B1**
(45) Date of publication and mention of the grant of the patent: **25.07.2012**
(21) Application number: 06838047.6
(22) Date of filing: 20.11.2006
(51) Int. Cl.: H04M 1/60, H04L 29/12

(54) **SYSTEM AND METHOD FOR MOBILE TELEPHONE AS AUDIO GATEWAY**
ANORDNUNG UND VERFAHREN IN DEM EIN MOBILTELEFON ALS AUDIOGATEWAY AUFTRITT
SYSTÈME ET PROCÉDÉ POUR TÉLÉPHONE MOBILE EN TANT QUE PASSERELLE AUDIO

(30) Priority: 31.05.2006 US 421195
(43) Date of publication of application: 04.03.2009
(73) Proprietor: Sony Ericsson Mobile Communications AB, 221 88 Lund (SE)
(72) Inventor: BLOEBAUM, L. Scott, Cary, North Carolina 27519 (US); LIU, Charles, Chapel Hill, 27514 (US)
(74) Representative: Andersson, Björn E.
(86) International application number: PCT/US2006/044877
(87) International publication number: WO 2007/139578

(56) References cited:
- WO-A-2005/041460
- WO-A-2006/116190

## Description

### TECHNICAL FIELD OF THE INVENTION

The present invention relates to a system and method for rendering multimedia content between a multimedia storage source and a mobile telephone and/or a rendering device (e.g., a headset).

### DESCRIPTION OF THE RELATED ART

Mobile telephones have evolved from voice-only electronic devices to multi-functional electronic devices. For example, mobile telephones may now function as electronic organizers, digital cameras, audio applications (e.g., MP3 players), video applications (e.g., video players), video game terminals, etc. Moreover, mobile telephones are not only used for voice communications, but they also are used in a variety of other forms (e.g., in instant messaging applications, sharing photographs, gaining access to information on the Internet, etc).

As the mobile telephone has evolved, so too have accessories for mobile telephones. For example, the first mobile telephones required the user to hold the telephone next to the user's mouth and ear during use.
Later, a wired ear bud and microphone were developed that connected to the mobile telephone were developed. The wired ear bud allows the user's hands to be free from holding the mobile telephone during use. Wireless headsets have also been developed that provide the user with both wireless and hands-free convenience.

A wireless interface commonly used in headsets and mobile telephones is referred to as "Bluetooth" technology. Bluetooth refers to a technical specification designed to standardize wireless transmission between a wide variety of electronic devices, such as personal computers, mobile telephones, headsets, printers, personal digital assistants ("PDAs"), etc. Bluetooth acts as a "virtual cable", whereby one electronic device can easily communicate with another electronic device.

Bluetooth operates using frequency-hopping spread spectrum, where data packets are spread across the 2.45-GHz Spectrum at a rate of 1,600 hops per second to lessen interference. For Bluetooth devices, the nominal link range is 10 meters and the gross data rate is up to 3 Mbps, although higher data rates have been proposed for future versions of the standard. Bluetooth can support both synchronous connection oriented ("SCO") links for voice and asynchronous connectionless ("ACL") links for packet data.

Wireless local area networks ("WLANs") are now ubiquitous in everyday life. Such WLAN's are commonly available in many public areas (so-called "hotspots" or "hotzones"), as well as in homes and office environments. WLANs are generally compliant with one or more IEEE standards (e.g., 802.11a, 802.11b, 802.11g, etc.) and are easily configured to provide for open access or to limit access by authorization and link-level security procedures.

End users generally access the WLAN through WLAN adapters that may be implemented as a removable or fully embedded component in a stationary, portable or fully mobile device. Examples of such implementations in a desktop computer include ISA or PCI cards, as well as an external or removable USB adapter. Typical implementations for laptop computers include removable PCMCIA cards or embedded PCI Express or USB adapters, while typical implementations for PDAs and mobile telephones include removable SD Cards or embedded with USB or SDIO interconnections. In addition, the physical WLAN adapter is typically augmented with software (a "driver") that allows the device's operating system to manage the adapter and to create a transparent connection to the wireless network that can be used by various applications to the benefit of the end user.

Conventional methods for facilitating communication between mobile telephones and mobile telephone accessories (e.g., headsets, hands-free kits, etc.) are generally capable of receiving signals received directly from the mobile telephone. In the case of wireless communication between the mobile telephone and the mobile telephone accessory, a Bluetooth compatible protocol is often times utilized. With the Bluetooth implementation, media may be received by the mobile telephone is generally provided in an IETF protocol (e.g. SIP, SDP, RTP, TCP, UDP, etc.). Once received by the mobile telephone, the streaming media is converted into a Bluetooth-specific protocol (e.g., advanced audio distribution profile A2DP) and then transmitted to the rendering device (e.g., a headset). Converting the streaming media to a Bluetooth-specific protocol limits the functionality of the mobile telephone in a variety of ways, for example, limits the functionality of the rendering device, limits the ability of the user to use the mobile telephone for multiple tasks, limits the battery life of the mobile telephone, etc.

WO 2005/041460 discloses a method for selectively attaching to a cellular data service to a short distance wireless network. A device, such as a cellular telephone, includes a processor and memory to store a software component for selectively attaching to a cellular data service to the short distance wireless network responsive to a terminal in the short distance wireless network communicating with the device.

The communicating includes identifying the type of terminal, the terminal generating a message to the device, the terminal requesting a private IP address or the terminal requesting cellular data service from the cellular network. A cellular data service is selectively attached to the short distance wireless network responsive to a device communicating with multiple terminals. The short distance wireless network is a Bluetooth wireless local area network or an 802.11 wireless local area network.

### SUMMARY

Often times, it is desirable for users of mobile telephones to utilize the full functionality of their mobile telephone accessories, as well as gain access to multimedia content. Thus, a strong need exists for a system and method for establishing a data path utilizing IETF-compliant protocols between endpoints (e.g., streaming source and rendering device) of a wireless network.

One aspect of the invention relates to a method for rendering multimedia content according to claim 1,

According to an aspect of the invention, the mobile telephone is configured to provide one or more operations on a received signal from the network utilizing a Dynamic Host Configuration Protocol.

According to an aspect of the invention, the mobile telephone is configured to provide one or more operations on a received signal from the network utilizing network address translation.

According to an aspect of the invention, the request for access is transmitted by a wireless local area adapter associated with the mobile telephone.

According to an aspect of the invention, wherein the mobile telephone is associated with the rendering device prior to requesting access to the wireless network.

According to an aspect of the invention, the rendering device is a wireless headset.

According to an aspect of the invention, the mobile telephone is authenticated with the network prior to providing an identification of services and/or devices available on the wireless network.

According to an aspect of the invention, the server is a media server.

Other systems, devices, methods, features, and advantages of the present invention will be or become apparent to one having ordinary skill in the art upon examination of the following drawings and detailed description. It is intended that all such additional systems, methods, features, and advantages be included within this description, be within the scope of the present invention, and be protected by the accompanying claims.

It should be emphasized that the term "comprise/comprising" when used in this specification is taken to specify the presence of stated features, integers, steps or components but does not preclude the presence or addition of one or more other features, integers, steps, components or groups thereof."

The term "electronic equipment" includes portable radio communication equipment. The term "portable radio communication equipment", which herein after is referred to as a mobile radio terminal includes all equipment such as mobile telephones, pagers, communicators, i.e., electronic organizers, personal digital assistants (PDA's), portable communication apparatus, smart phones or the like.

### BRIEF DESCRIPTION OF THE DRAWINGS

The foregoing and other embodiments of the invention are hereinafter discussed with reference to the drawings. The components in the drawings are not necessarily to scale, emphasis instead being placed upon clearly illustrating the principles of the present invention. Likewise, elements and features depicted in one drawing may be combined with elements and features depicted in additional drawings. Moreover, in the drawings, like reference numerals designate corresponding parts throughout the several views.
Figure 1 is an exemplary block diagram of a mobile telephone and headset in accordance with aspects of the present invention.
Figure 2 is an exemplary schematic diagram of a mobile telephone and headset in accordance with aspects of the present invention.
Figure 3 is an exemplary block diagram of a network in accordance with aspects of the present invention.
Figure 4 is an exemplary schematic diagram of a server in accordance with aspects of the present invention.
Figures 5A and 5B are exemplary protocol stacks associated with a mobile telephone and a rendering device in accordance with aspects of the present invention.
Figure 6 is an exemplary flow chart in accordance with aspects of the present invention.

### DETAILED DESCRIPTION OF EMBODIMENTS

The present invention is directed to a system and method for rendering multimedia content between one or more devices associated with a wireless local area network or a wide area network and a mobile telephone and/or mobile telephone accessory. The mobile telephone acts as a gateway or proxy for routing multimedia content (e.g., audio files, video files, etc.) stored on a remote server.

The invention is described primarily in the context of a mobile telephone. However, it will be appreciated that the invention is not intended to relate solely to mobile telephones and can relate to any type of electronic equipment. Other types of electronic equipment that may benefit from aspects of the present invention include playback devices having at least audio playback capability or video playback capability in addition to audio playback capability. Exemplary playback devices include MP3 players, CD players and DVD players.

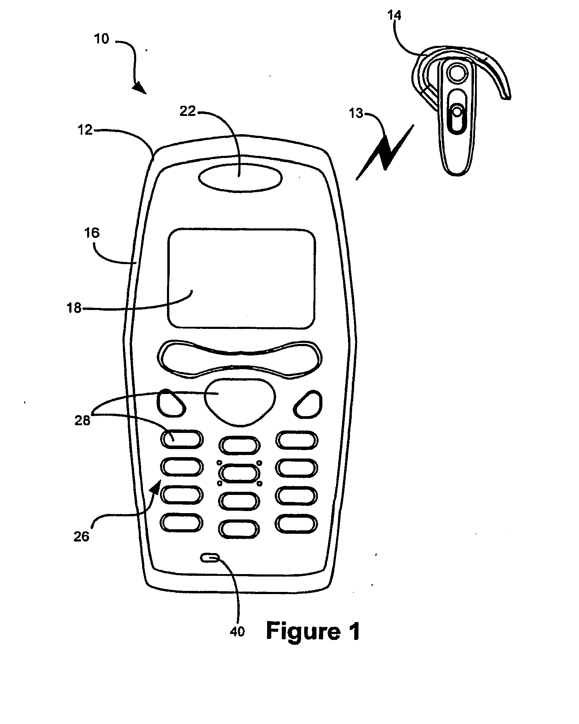

Referring to Figure 1, an electronic equipment assembly 10 is shown in accordance with the present invention. The illustrated electronic equipment assembly 10 includes electronic equipment 12 and a wirelessly coupled electronic equipment accessory 14. The electronic equipment 12 in the exemplary embodiment is a mobile telephone and will be referred to as the mobile telephone 12. The mobile telephone 12 is shown as having a "brick" or "block" design type housing 16, but it will be appreciated that other type housings, such as a clamshell housing or a slide-type housing, may be utilized without departing from the scope of the invention.

The electronic equipment accessory 14 in the exemplary embodiment is a rendering device and will be referred to as the headset 14. The headset 14 is shown as an ear mountable speaker and microphone assembly that exchanges audio data with the mobile telephone 12 over a wireless link. One of ordinary skill in the art will appreciate that any rendering device operable to receive signals from the mobile telephone 10 is deemed to fall within the scope of the present invention. For example, suitable rendering devices include headphones, earphones, speakers, televisions, stereos, and the like.

For purposes of the description herein, a wireless link is established using a Bluetooth protocol, such as in accordance with the Specification of the Bluetooth System, Covered Core Package version 2.0 + EDR, dated November 4, 2004, which is incorporated herein by reference in its entirety. Other suitable wireless interfaces (e.g., radio frequency, 802.11 compatible protocols, infrared, etc.) may be used to transmit data to the mobile telephone 12 and/or to the headset 14.

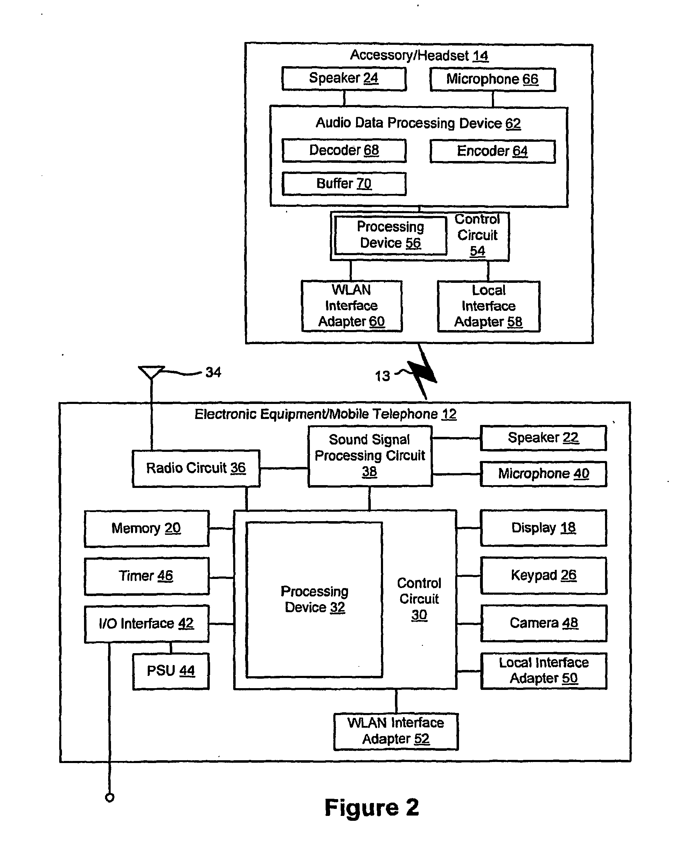

The mobile telephone 12 includes a display 18. The display 18 displays information to a user such as operating state, time, telephone numbers, contact information, various navigational menus, etc., which enables the user to utilize the various feature of the mobile telephone 12. The display 18 may also be used to visually display content accessible by the mobile telephone 12 and/or headset 14 from one or more remote sources (e.g., a media server). The displayed content may include audio and/or video presentations stored locally in memory 20 (Figure 2) of the mobile telephone 12 and/or stored remotely from the mobile telephone 12 (e.g., on a remote storage device, a media server, remote personal computer, etc.). Such presentations may be derived, for example, from multimedia files, including audio and/or video files, from a received mobile radio and/or television signal, etc. In many situations, the video presentations are accompanied by audio presentations. For example, the displayed video component may be a "music video" and the corresponding audio component may be music intended to be synchronized with the video component. As another example, the displayed video component may correspond to a received mobile television signal and the corresponding audio component may be speech and/or music intended to be synchronized with the video component.

The audio component may be broadcast to the user with a speaker 22 of the mobile telephone 12. Alternatively, the audio component may be broadcast to the user with a speaker 24 (Figure 2) of the headset 14. For stereo listening, the headset 14 may include a pair of speakers 24. Delivery of audio data from content source to the mobile telephone 12 and the headset 14 will be described in greater detail below.

The mobile telephone 12 further includes a keypad 26 that provides for a variety of user input operations. For example, the keypad 26 may include alphanumeric keys 28 for allowing entry of alphanumeric information such as telephone numbers, phone lists, contact information, notes, etc. In addition, the keypad 26 typically may include special function keys such as a "call send" key for initiating or answering a call, and a "call end" key for ending, or "hanging up" a call. Special function keys may also include menu navigation keys, for example, for navigating through a menu displayed on the display 18 to select different telephone functions, profiles, settings, etc., as is conventional. Other keys associated with the mobile telephone 12 may include a volume key, audio mute key, an on/off power key, a web browser launch key, a camera key, etc. Keys or key-like functionality may also be embodied as a touch screen associated with the display 18.

The mobile telephone 12 includes conventional call circuitry that enables the mobile telephone 12 to establish a call and/or exchange signals with a called/calling device, typically another mobile telephone or landline telephone. However, the called/calling device need not be another telephone, but may be some other device such as an Internet web server, content providing server, etc.

Referring to Figure 2, a functional block diagram of the electronic equipment assembly 10 is illustrated. The mobile telephone 12 includes a primary control circuit 30 that is configured to carry out overall control of the functions and operations of the mobile telephone 12. The control circuit 30 may include a processing device 32, such as a CPU, microcontroller or microprocessor. The processing device 32 executes code stored in a memory (not shown) within the control circuit 30 and/or in a separate memory, such as memory 20, in order to carry out conventional operation of the mobile telephone 12. The memory 20 may be, for example, a buffer, a flash memory, a hard drive, a removable media, a volatile memory and/or a non-volatile memory. In addition, the processing device 32 executes code to carry out various functions of the mobile telephone 12.

Continuing to refer to Figures 1 and 2, the mobile telephone 12 includes an antenna 34 coupled to a radio circuit 36. The radio circuit 36 includes a radio frequency transmitter and receiver for transmitting and receiving signals via the antenna 34 as is conventional. The mobile telephone 12 further includes a sound signal processing circuit 38 for processing the audio signal transmitted by/received from the radio circuit 36. Coupled to the sound processing circuit 38 are the speaker 22 and a microphone 40 that enable a user to listen and speak via the mobile telephone 12 as is conventional. The radio circuit 36 and sound processing circuit 38 are each coupled to the control circuit 30 so as to carry out overall operation.

The mobile telephone 12 also includes the aforementioned display 18 and keypad 26 coupled to the control circuit 30. The mobile telephone 12 further includes an I/O interface 42. The I/O interface 42 may be in the form of typical mobile telephone I/O interfaces, such as a multi-element connector at the base of the mobile telephone 12. As is typical, the I/O interface 42 may be used to couple the mobile telephone 12 to a battery charger to charge a power supply unit (PSU) 44 within the mobile telephone 12. In addition, or in the alternative, the I/O interface 42 may serve to connect the mobile telephone 12 to a wired personal hands-free adaptor, to a personal computer or other device via a data cable, etc. The mobile telephone 12 may also include a timer 46 for carrying out timing functions. Such functions may include timing the durations of calls, generating the content of time and date stamps, etc.

The mobile telephone 12 may include various built-in accessories, such as a camera 48 for taking digital pictures. Image files corresponding to the pictures may be stored in the memory 20. In one embodiment, the mobile telephone 12 also may include a position data receiver (not shown), such as a global positioning satellite (GPS) receiver, Galileo satellite system receiver or the like.

To establish wireless communication with other locally positioned devices, such as the headset 14, another mobile telephone, a computer, etc., the mobile telephone 12 may include a local wireless interface adapter 50, such as a Bluetooth adapter.

To establish wireless communication with other locally positioned devices, such as a wireless local area network, wireless access point and the like, the mobile telephone 12 may further include a wireless interface adapter 51. As shown in Figure 2, the wireless interface adapter 51 may be a wireless local area network interface adapter and is referred to herein as WLAN adapter 52. One of ordinary skill in the art will readily appreciate that the WLAN adapter 52 is exemplary and any suitable connectivity technology may be implemented in accordance with the present invention (e.g., Bluetooth, infrared, etc.). Preferably, the WLAN adapter 52 is compatible with one or more IEEE 802.11 protocols (e.g., 802.11(a), 802.11(b) and/or 802.11(g), etc.) and allows the mobile telephone 12 to acquire a unique identifier (e.g., MAC and IP addresses) on the WLAN and communicate with one or more devices on the WLAN, assuming the user has the appropriate privileges and/or has been properly authenticated.

The mobile telephone 12 may be configured to operate in a wide area communications system. The system can include one or more servers or call control elements for managing calls placed by and destined to the mobile telephone 12, transmitting content (e.g., image files, audio files, video files, voice and/or data packets, etc.) to the mobile telephone 12 and carrying out any other support functions. The server communicates with the mobile telephone 12 via a network and a transmission medium. The transmission medium may be any appropriate device or assembly, including, for example, a communications tower, another mobile telephone, a wireless access point, a satellite, etc. Portions of the network may include wireless transmission pathways.

The headset 14 includes a primary control circuit 54 that is configured to carry out overall control of the functions and operations of the headset 14. The control circuit 54 may include a processing device 56, such as a CPU, microcontroller or microprocessor. The processing device 56 executes code stored in a memory (not shown) within the control circuit 54 and/or in a separate memory, such as memory (not shown), in order to carry out operation of the headset 14, as described herein. The memory may be, for example, a buffer, a flash memory, a hard drive, a removable media, a volatile memory and/or a non-volatile memory. In addition, the processing device 56 executes code to carry out various functions of the headset 14.

The headset 14 includes a local interface adapter 58 that is compatible with the local interface adapter 50 of the mobile telephone 12 to establish a wireless interface between the headset 14 and the mobile telephone 12. The local interface adapter 58 is coupled to the control circuit 54 to selectively control and process information and/or data received and/or transmitted by the local interface adapter 58. Preferably, as discussed above, the local interface adapter 58 is Bluetooth compatible. The wireless interface established between adapters 50 and 58 may be used to exchange data, such as audio data, commands, control and/or status information between the mobile telephone 12 and the headset 14. One of ordinary skill in the art will understand the basic operations of a Bluetooth wireless communication interface, so the details will not be described here in detail for the sake of brevity.

The headset 14 further includes a WLAN interface adapter 60. The WLAN interface adapter 60 is coupled to the control circuit 54 to selectively control and process information and/or data received and/or transmitted by the WLAN interface adapter 60. Preferably, the WLAN adapter 60 is compatible with one or more IEEE 802.11 protocols (e.g., 802.11(a), 802.11(b) and/or 802.11(g), etc.) and allows headset 14 to acquire a unique address (e.g., IP address) on the WLAN and communicate with one or more devices associated with the WLAN, assuming the user has the appropriate privileges and/or has been properly authenticated. Although the interface adapter 60 has been described in terms of WLAN interface, similar to wireless interface adapter 52 described above, the interface adapter 60 may implement any suitable connectivity technology in accordance with the present invention (e.g., Bluetooth, infrared, etc.).

The headset 14 further includes an audio data processing device 62 that manages audio data. For example, the audio data processing device 62 may include an encoder 64 that encodes an audio signal received from a microphone 66 coupled to the headset 14. Encoded audio data may be transmitted to the mobile telephone 12 for use as part of a telephone call.

In addition, the audio data processing device 62 may include a decoder 68 and a data buffer 70 to process audio data received from the mobile telephone 12 and/or one or more devices associated with a WLAN.

The received audio data may be incoming audio data associated with a telephone call. In other situations, the audio data received by the headset 14 may be audio (e.g., music, sound, voice, etc.) derived from an audio file played back by the mobile telephone 12. The audio data received by the headset 14 may also originate from one or more devices associated with a WLAN and transmitted and/or streamed to the headset 14 for listening by the user, as described below. In yet other situations, the audio data may be associated with video content displayed on the display 18 by the mobile telephone 12. For example, a video file containing an audio component stored in the memory 20 may be played back by the mobile telephone 12 or a video signal containing an audio component may be received by the mobile telephone 12.

In these situations, a video component of the video file or received video signal may be decoded by, for example, the control circuit 30 or dedicated video decoder (not shown) to generate a video signal output to the display 18 for viewing. The audio component of the video file or received video signal may be decoded and delivered as an audio signal to the speaker 22 and/or the audio component may be transmitted as audio data to the headset 14 for decoding into an audio signal that is broadcast by the speaker 24. In another embodiment, the audio component of the video file or received video signal may be transmitted as audio data directly to the headset 14 from one or more devices associated with a local area network, without transmission to the mobile telephone 12, for decoding into an audio signal that is broadcast by the speaker 24.

As explained in detail below, audio data transmitted from the mobile telephone 12 to the headset 14 and/or transmitted from one or more devices associated with a WLAN to the headset 14 is typically in the form of media packets. Each media packet may contain a quantity of audio data, such as about 5 milliseconds of audio data. The audio data may be buffered by the buffer 62 and decoded by the decoder 60 into an audio signal for delivery to the speaker 24. As will be appreciated by one of ordinary skill in the art, the audio data may be mono, stereo or surround-sound, or arranged in any other suitable audio format.

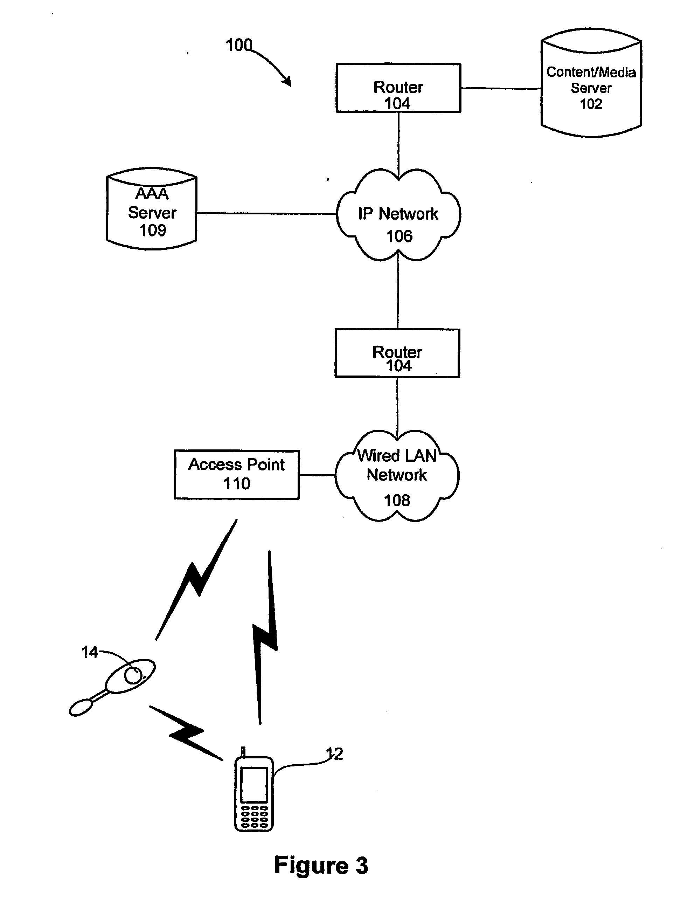

An exemplary communication network 100 in accordance with aspects of the present invention is illustrated in Figure 3. The exemplary network illustrated in Figure 3 is a public wireless local area network, which utilizes Internet Engineering Task Force (IETF) protocols (e.g., IP, TCP, UDP, RTP, HTTP and the like) between the endpoints (e.g., the streaming source and rendering device (e.g., headset)). In this illustration, the mobile telephone 12 acts as a gateway or proxy for routing content (e.g., audio files, video files, etc.) stored on the server 102 through one or more routers 104 and an IP network 106, which may be any suitable network to a destination source. From the IP network 106 and, optionally, router 104, the multimedia content is transmitted to wired LAN 108, routed to the ACCESS POINT 110, and output to the destination source (e.g., mobile telephone 12 and/or rendering device 14) in a wireless manner.

Although the server 102 is shown as being outside of the wired LAN 108, this is for illustrative purposes only. One of ordinary skill in the art will readily appreciate that the server 102 may be located within the wired LAN 108 depending on the specific requirements of the server 102 and/or the LAN 108 or can be on a remote network that is connected to LAN 108 via the Internet. One of ordinary skill in the art will also appreciate that the exemplary LAN 108 may be a wireless local area network, a wide area network, personal-area access technology (e.g., wireless local area network, cellular network, WiMax, ultra wideband network, etc.) and/or a public network (e.g., the Internet).

As shown in Figure 3, the LAN 108 is communicatively couple to the access point 110. Access point 110 provides wireless communication medium between the mobile telephone 12 and/or headset 14 to the LAN 108. Thus, the mobile telephone 12 and/or headset 14 are communicatively coupled to the server 102.

One of ordinary skill in the art will appreciate that the communication medium between devices take the form of any medium that permits electronic devices to exchange information or data. For instance, the communication medium may be a wired communications medium, such as Ethernet, or a wireless communication medium, such as IEEE 802.11(a), 802.11(b) or 802.11(g). In addition, the communication medium may also be a combination of wired and wireless communications mediums. One of ordinary skill in the art will also appreciate that any communications medium allowing the functionality described herein shall be deemed to be within the scope of the present invention. Preferably the communication medium can support a variety of network protocols including, for example, IETF-compatible protocols (e.g., IP, TCP, UDP, RTP, HTTP and the like)

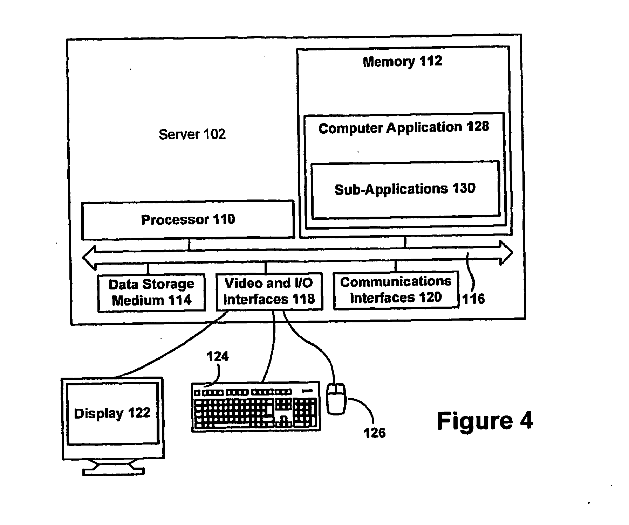

Figure 4 illustrates a schematic block diagram of an exemplary server (e.g., server 102). The server 102 may be any type of server. Preferably, the server 102 is a media server that is compatible with protocols developed by the Internet Engineering Task Force (IETF) (e.g., IP, TCP, UDP, RTP, HTTP and the like). The server 102 generally includes a processor 110, a memory 112, a data storage medium 114, a local interface 116, video and input/output interfaces 118, and various communication interfaces 120. The server 102 may include optionally a display 122, a keyboard 124, and a user input device 126 (e.g., a computer mouse).

The server 102 is capable of executing one or more computer applications 128 in accordance with aspects of the present invention. In one embodiment, computer applications 128 include at least one audio and/or video application program that is capable of transmitting multimedia content (e.g., audio files, video files, audiovisual files, photographs, slides, radio, streaming audio and/or video, etc.) in a user-sensible format upon request from an associated user. The multimedia content may be stored in the data storage medium 114 or a remote storage medium (not shown) that is communicatively coupled to the WLAN 100.

As stated above, the multimedia content may take any form (e.g., audio, video, photographs, streaming audio and/or video and the like) and may be stored in any suitable format (e.g., MPEG, AVI, MP3, JPG, TIFF, and the like). The server 102 may also store communications software, which is capable of converting the multimedia content stored on the server 102 and/or the remote storage medium to a format that can be rendered locally and/or remotely by the requesting device and/or a peripheral device associated with the requesting device (e.g., headset 14). Alternatively, the server 102 may provide the multimedia content in a known format and allow the requesting device and/or a peripheral device associated with the requesting device to perform any necessary conversion.

The computer application 128 may be logically associated with or call one or more additional computer applications or one or more sub-computer applications 130, which generally include compilations of executable code. In one embodiment, the computer application 128, and/or the sub-applications 130 are embodied as one or more computer programs (e.g., one or more software applications including compilations of executable code). The computer program(s) can be stored on a data storage medium or other computer readable medium, such as a magnetic or optical storage device (e.g., hard disk, CD-ROM, DVD-ROM, etc.).

To execute the computer application 128 and associated sub-applications 130, the server 102 can include one or more processors 110 used to execute instructions that carry out a specified logic routine(s).
Preferably, the server 102 is based on a client - server architecture and may serve multiple clients. However, one of ordinary skill in the art will readily appreciate that any combination of computers having the functionality described herein shall be deemed to be within the scope of the present invention. As stated above, the server 102 may be a media server that is compatible with IETF protocols (e.g., IP, TCP, UDP, RTP, HTTP and the like).

The server 102 may have a memory 112 for storing data, software, logic routine instructions, computer programs, files, operating system instructions, multimedia content and the like. As illustrated in Figure 4, the computer application 128 and sub-applications 130 can be stored in the memory 112. The memory 112 can comprise several devices and includes, for example, volatile and non-volatile memory components. Accordingly, the memory 112 can include, for example, random access memory (RAM), read only memory (ROM), hard disks, floppy disks, compact disks (e.g., CD ROM, DVD ROM, CD RW, etc.), tapes, and/or other memory components, plus associated drives and players for these memory types. The processor 110, memory 112, and the data storage medium 114 are coupled using a local interface 116. The local interface 116 can be, for example, a data bus with accompanying control bus, a network, or other subsystem.

The server 102 can have various video and input/output interfaces 118 as well as one or more communication interfaces 120. The interfaces 118 can be used to couple the server 102 to various peripherals, such as a display 122 (e.g., a CRT display, an LCD display, a plasma display, etc.), a keyboard 124, and a user input device 126. The communications interfaces 120 can be comprised of, for example, a modem, a network interface card, and/or a wireless network interface card. The communications interfaces 130 can enable the server 102 to transmit and receive multimedia content (e.g., audio files, video files, photographs and the like) via an external network, such as the Internet, a wide area network (WAN), a local area network (LAN), direct data link, or similar wired (e.g., Ethernet) or wireless system (e.g., 802.11-compliant protocols). Preferably, the system 100 has the capabilities for both a wired communications interface (e.g., Ethernet) and a wireless communications interface (e.g., 802.11-compliant protocols) to accomplish the functionality described herein.

The server 102 transmits and receives information (e.g., multimedia content, data, requests for information, etc.) to and from peripherals and/or devices that comprise the LAN 106. The LAN 106 generally includes any electronic device that is capable of communicating (e.g., receiving and/or transmitting information) with any other device, including the network 100. The mobile telephone 12 and/or headset 14 are portable devices that may access one or more services provided by the network 100, through WLAN interface adapters 52 and 60, respectively.

As shown in Figure 3, the network 100 includes wireless communication from the LAN 108 to the mobile telephone 12 and/or headset 14 through access point 110 and one or more intermediary devices (e.g. access point 110, routers 104, IP network 106, etc.). Mobile telephone 12 is provided with a communication protocol that can be executed by an internal processor of the device and/or by dedicated communications hardware (e.g., a transceiver) coupled to the device for communication with the access point 110. The WLAN adapter 52 of the mobile telephone generally includes a built-in antenna (not shown). The antenna allows the WLAN adapter 52 to exchange signals with the wireless access point 110. The access point 110 generally executes a communication protocol corresponding to the communication protocol executed by the client devices (e.g., device associated with the LAN 108 and/or the mobile telephone 12. The access point 110 also includes communications hardware (e.g., a transceiver with an antenna) for broadcasting signals to the various client devices and receiving signals broadcast by the client devices.

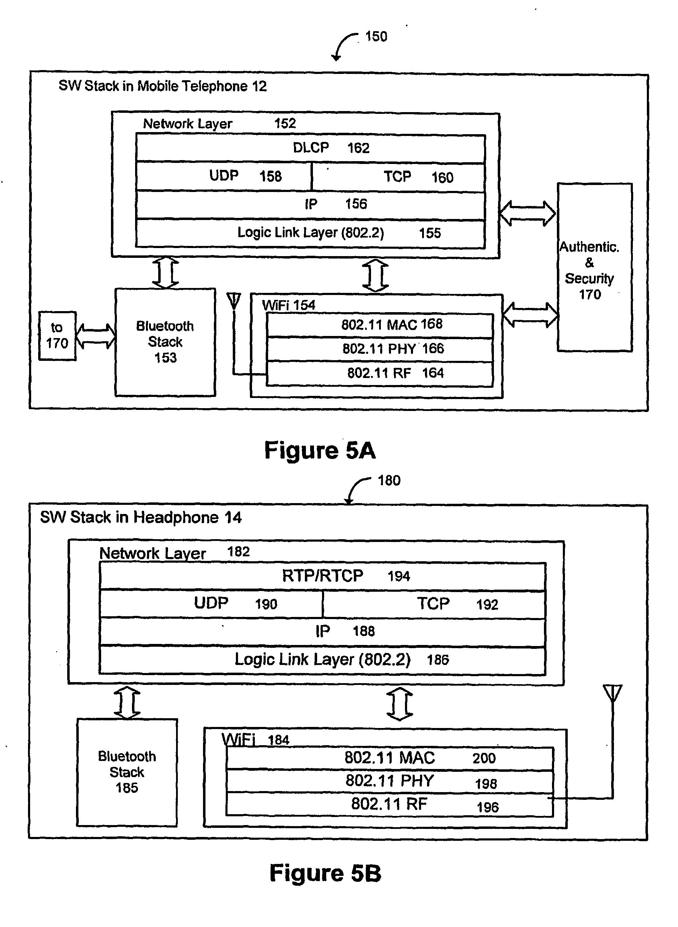

Figures 5A and 5B illustrate an exemplary IETF standard protocol stacks implemented for the mobile telephone 12 and the headset 14, respectively. Referring to Figure 5A, an exemplary protocol stack is illustrated for mobile telephone 12. The protocol stack 150 may include: a network layer 152, a WiFi layer 154 and a Bluetooth stack 153. The network layer 152 includes a logic link layer 155, an Internet Protocol (IP) layer 156, a user datagram protocol (UDP) layer 158, a transport control protocol (TCP) layer 160, and a data link control protocol (DLCP) layer 162. The WiFi layer 154 includes an 802.11 radio frequency (RF) layer 164, an 802.11 physical (PHY) layer 166 and an 802.11 medium access control (MAC) layer 168. The network layer 152 and the WiFi layer 154 communicate with an authentication and security module 170. Likewise, the Bluetooth stack 153 may also communicate with the network layer 152 and the authentication and security module 170

Referring to Figure 5B, an exemplary protocol stack 180 is illustrated for headset 14. The protocol stack 180 includes: a network layer 182, a WiFi layer 184 and a Bluetooth stack 185. The network layer 182 includes a logic link layer 186, an Internet Protocol (IP) layer 188, a user datagram protocol (UDP) layer 190, a transport control protocol (TCP) layer 192 and a Real Time Transport Protocol/ Real Time Control Protocol (RTP/RTCP) layer 194. The WiFi layer 184 includes an 802.11 radio frequency (RF) layer 196, an 802.11 physical (PHY) layer 198 and an 802.11 medium access control (MAC) layer 200. The headphone 14 is capable of receiving and rendering Bluetooth signals and WiFi signals through the respective layers (e.g.., Bluetooth stack 185, WiFi layer 184).

The mobile telephone 12 also includes dynamic host configuration protocol (DHCP) and network address translation (NAT) server functionality that is typically found in a network gateway. In this manner, devices peripheral to the mobile telephone 12, such as the headset 14 are treated as a subnet that is "hidden" to the network beyond the gateway. By using DHCP and NAT, respectively, the mobile telephone assigns subnet IP addresses to the peripherals and directs incoming IP traffic (e.g., streaming audio) from the network to the proper peripheral(s) based on the assigned subnet addresses.

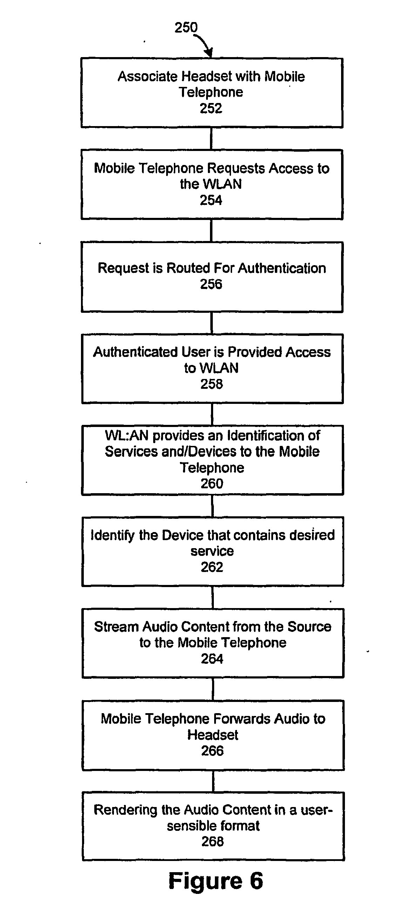

An exemplary method 250 in accordance with aspects of the present invention is illustrated in Figure 6. Referring to Figures 3 and 6, at step 252, the user associates the headset 14 with the mobile telephone 12. The headset 14 is designated as the audio sink endpoint (e.g., rendering device) for rendering one or more audio components transmitted from server 102. The headset 14 becomes part of the private subnet and receives an IP address from the DHCP server of the mobile telephone 12.

At step 254, the mobile telephone 12 requests access to the network 100 through the access point 110. The request may include a session description protocol (SDP) payload field, which may specify, for example, negotiation parameters, services requested, format of information, etc. In the exemplary system illustrated in Figure 3, a public WLAN 100 is provided, wherein the user must be authenticated prior to access to the network 100. Accordingly, at step 256, the request is routed to the AAA server 109 by one or more redirect servers and/or proxy servers (not shown). The AAA server 109 provides authentication services to the public network 100. Assuming the user is properly authenticated, the user is provided access to the network 100, at step 258. If the user is unable to properly authenticate him or herself, the user is denied access to the public network 100.

At step 260, an identification of available services and/or devices is provided to the mobile telephone 12. Once network access is established, at step 262, the user of the mobile telephone 12 may identify desired audio content and/or devices on a remote server 102. For example, this could be content stored on server 102 (e.g., a personal server, a personal computer in a home, a media server, etc. or content from a commercial music service (e.g., iTunes, operator portal, etc.)). The user selects the desired content to stream and initiates a streaming session with the server 102. The mobile telephone 12 also configures the headset 14 to accept the pending media flow from the server 102.

At step 264, the server transmits the audio to the mobile telephone 12 using conventional IETF protocols (e.g., RTP, UDP and IP) over the network 100. At step 266, the mobile telephone 12 then forwards these packets to the headset 14, using NAT to establish the correct address for the headset 14 in the internal subnet. At step 268, the headset 14 unpacks, decodes and renders the streaming audio in a user-sensible format through one or more speakers 24.

In this example, session control is managed by the mobile telephone 12 while the media stream is established between the server and headset. Session control may occur between local interface adapters 58 and 50 of the headset 14 and the mobile telephone 12, respectively. Session control may also occur between WLAN interface adapters 60 and 52 of the headset and the mobile telephone 12, respectively. Steps 252 through 268 are generally repeated whenever a new session is started. The exemplary method 250 utilizes WLAN interface adapters 52 and 60 to stream audio from the server 102 to the headset 14.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means". It should also be noted that although the specification lists method steps occurring in a particular order, these steps may be executed in any order, or at the same time.

Computer program elements of the invention may be embodied in hardware and/or in software (including firmware, resident software, micro-code, etc.). The invention may take the form of a computer program product, which can be embodied by a computer-usable or computer-readable storage medium having computer-usable or computer-readable program instructions, "code" or a "computer program" embodied in the medium for use by or in connection with the instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium such as the Internet. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner. The computer program product and any software and hardware described herein form the various means for carrying out the functions of the invention in the example embodiments.

## Claims

1. A method for rendering multimedia content, the method comprising:
requesting access to a wireless network (100) by a mobile telephone (12), wherein the wireless network (100) includes at least one remote server (102);
assigning an internet protocol (IP) address on a private subnet to an electronic equipment accessory (14) by the mobile telephone (12);
wherein the method is **characterized by**:
establishing a session between the remote server and the electronic equipment accessory through the mobile telephone, wherein control of the session is managed by the mobile telephone and a communicative coupling is established between the electronic equipment accessory and the remote server based on said IP address on the private subnet;
receiving, by the mobile telephone, an identification of available services;
selecting by the user of the mobile telephone, the desired audio content to stream and initiating streaming of said desired audio content with the remote server; and
streaming said audio content related to the selection from the remote server and routing the streaming audio to the electronic equipment accessory (14) based on said IP address on the private subnet,
wherein the mobile telephone uses network address translation to route the streaming audio between the remote server and the electronic equipment accessory.

2. The method of claim 1, wherein the mobile telephone (12) is configured to provide one or more operations on a received signal from the network (100) utilizing a Dynamic Host Configuration Protocol.

3. The method of any of claims 1-2, wherein the mobile telephone (12) is configured to provide one or more operations on a received signal from the network (100) utilizing network address translation.

4. The method of any of claims 1-3, wherein a request for access is transmitted by a wireless local area adapter (52) associated with the mobile telephone (12).

5. The method of any of claims 1-4 further including associating the mobile telephone (12) to the electronic equipment accessory (14) prior to requesting access to the wireless network (100).

6. The method of any of claims 1-5, wherein the electronic equipment accessory (14) is a wireless headset, headphone, earphone, speaker, television, or stereo

7. The method of any of claims 1-6 further including authenticating the mobile telephone (12) with the network (100) prior to providing an identification of services available on the wireless network (100).

## Patentansprüche

1. Verfahren zum Rendern von Multimediainhalt, wobei das Verfahren umfasst:
ein Anfragen von Zugriff auf ein Drahtlosnetzwerk (100) durch ein Mobiltelefon (12), wobei das Drahtlosnetzwerk (100) wenigstens einen entfernten Server (102) umfasst;
ein Zuweisen einer Internetprotokoll- (IP) Adresse auf einem privaten Unternetz an ein Elektronikausrüstungszubehör (14) durch das Mobiltelefon (12);
wobei das Verfahren **gekennzeichnet ist durch**:
ein Aufbauen einer Sitzung zwischen dem entfernten Server und dem Elektronikausrüstungszubehör **durch** das Mobiltelefon, wobei die Steuerung der Sitzung **durch** das Mobiltelefon verwaltet wird und eine kommunikative Kopplung zwischen dem Elektronikausrüstungszubehör und dem entfernten Server aufgebaut wird, basierend auf der IP-Adresse des privaten Unternetzes;
ein Empfangen, **durch** das Mobiltelefon, einer Identifizierung von verfügbaren Diensten;
ein Wählen, **durch** den Benutzer des Mobiltelefons, des gewünschten Audioinhalts zum Streamen und ein Beginnen des Streamens des gewünschten Audioinhalts mit dem entfernten Server; und
ein Streamen des Audioinhalts, der mit der Auswahl von dem entfernten Server verwandt ist, und ein Routen des Streaming-Audios an das Elektronikausrüstungszubehör (14), basierend auf der IP-Adresse auf dem privaten Unternetz, wobei das Mobiltelefon eine Netzwerkadressenübersetzung nutzt, um das Streaming-Audio zwischen dem entfernten Server und dem Elektronikausrüstungszubehör zu leiten.

2. Verfahren nach Anspruch 1, wobei das Mobiltelefon (12) konfiguriert ist, eine oder mehr Operationen auf einem empfangenen Signal von dem Netzwerk (100) bereitzustellen, unter Nutzung von Dynamic Host Configuration Protocol.

3. Verfahren nach einem der Ansprüche 1 bis 2, wobei das Mobiltelefon (12) konfiguriert ist, eine oder mehr Operationen auf einem empfangenen Signal von dem Netzwerk (100) bereitzustellen, unter Nutzung von Netzwerkadressenübersetzung.

4. Verfahren nach einem der Ansprüche 1 bis 3, wobei eine Anfrage zum Zugriff von einem Wireless-Local-Area-Adapter (52) übertragen wird, der dem Mobiltelefon (12) zugehörig ist.

5. Verfahren nach einem der Ansprüche 1 bis 4, ferner umfassend ein Assoziieren des Mobiltelefons (12) zu dem Elektronikausrüstungszubehör (14) vor dem Anfragen nach Zugriff auf das Drahtlosnetzwerk (100).

6. Verfahren nach einem der Ansprüche 1 bis 5, wobei das Elektronikausrüstungszubehör (14) ein Drahtlosheadset, Kopfhörer, Ohrhörer, Lautsprecher, Fernseher oder eine Stereoanlage ist.

7. Verfahren nach einem der Ansprüche 1 bis 6, ferner umfassend ein Authentifizieren des Mobiltelefons (12) mit dem Netzwerk (100) vor einem Bereitstellen einer Identifizierung von Diensten, die auf dem Drahtlosnetzwerk (100) verfügbar sind.

## Revendications

1. Procédé pour restituer un contenu multimédia, le procédé comprenant :
la demande d'un accès à un réseau sans fil (100) par un téléphone mobile (12), le réseau sans fil (100) comprenant au moins un serveur distant (102) ;
l'attribution d'une adresse de protocole internet (IP) sur un sous-réseau privé à un accessoire d'équipement électronique (14) par le téléphone mobile (12) ;
le procédé étant **caractérisé par** :
l'établissement d'une session entre le serveur distant et l'accessoire d'équipement électronique par l'intermédiaire du téléphone mobile, la commande de la session étant gérée par le téléphone mobile et un couplage de communication étant établi entre l'accessoire d'équipement électronique et le serveur distant en fonction de ladite adresse IP sur le sous-réseau privé ;
la réception, par le téléphone mobile, d'une identification de services disponibles ;
la sélection par l'utilisateur du téléphone mobile du contenu audio désiré devant être diffusé en flux et le déclenchement de la diffusion en flux dudit contenu audio désiré avec le serveur distant ; et
la diffusion en flux dudit contenu audio associé à la sélection à partir du serveur distant et l'acheminement de l'audio diffusé en flux vers l'accessoire d'équipement électronique (14) en fonction de ladite adresse IP sur le sous-réseau privé, le téléphone mobile utilisant une traduction d'adresse de réseau pour acheminer l'audio diffusé en flux entre le serveur distant et l'accessoire d'équipement électronique.

2. Procédé selon la revendication 1, dans lequel le téléphone mobile (12) est configuré de façon à effectuer une ou plusieurs opérations sur un signal reçu à partir du réseau (100) à l'aide d'un protocole DHCP (pour « Dynamic Host Configuration Protocol » - protocole de configuration d'hôte dynamique).

3. Procédé selon l'une quelconque des revendications 1 et 2, dans lequel le téléphone mobile (12) est configuré de façon à effectuer une ou plusieurs opérations sur un signal reçu à partir du réseau (100) à l'aide d'une traduction d'adresse de réseau.

4. Procédé selon l'une quelconque des revendications 1 à 3, dans lequel une demande d'accès est transmise par un adaptateur de zone locale sans fil (52) associé au téléphone mobile (12).

5. Procédé selon l'une quelconque des revendications 1 à 4, comprenant de plus l'association du téléphone mobile (12) à l'accessoire d'équipement électronique (14) avant la demande d'accès au réseau sans fil (100).

6. Procédé selon l'une quelconque des revendications 1 à 5, dans lequel l'accessoire d'équipement électronique (14) est un casque, un écouteur, une oreillette, un haut-parleur, une télévision ou une chaîne stéréophonique, sans fil.

7. Procédé selon l'une quelconque des revendications 1 à 6, comprenant de plus l'authentification du téléphone mobile (12) avec le réseau (100) avant la délivrance d'une identification de services disponibles sur le réseau sans fil (100).
